# EUROPEAN PATENT APPLICATION

(11) **EP 2 210 860 A1**
(43) Date of publication of application: **28.07.2010**
(21) Application number: 09000859.0
(22) Date of filing: 22.01.2009
(51) Int. Cl.: C01B 33/40, C09C 1/42

(54) **Pure nanoclay and process for preparing nanoclay**

(71) Applicant: Lo, Chi-Kang, Section 1 Taipei (TW)
(72) Inventor: Lo, Chi-Kang, Section 1 Taipei (TW)
(74) Representative: Grünecker, Kinkeldey, Stockmair & Schwanhäusser Anwaltssozietät

(57) **Abstract**

A process for extracting nanoclay from a layered clay, such as bentonite ore, is disclosed. The process includes mixing the layered clay with 30-500 times by weight of water; keeping the mixture still for about 24 hours to allow the layered clay and water to undergo a hydration reaction; stirring the mixture to form the liquid; keeping the liquid still in the first container for about 48 hours, wherein a precipitate is formed at a bottom of the first container; decanting the liquid that is free from the precipitate from the first container; keeping the liquid free from the precipitate in the second container for 1-180 days, wherein the precipitate is formed at the bottom of the second container; decanting and drying the liquid that is free from the precipitate from the second container to be nanoclays.

## Description

### FIELD OF THE INVENTION

The invention relates to a process for extracting nanoclay, and the nanoclay may be used for producing polymer-layered silicate nanocomposites (PLSNs) and medical applications.

### BACKGROUND OF THE INVENTION

Nanoclay is a crucial material in the applications of nanotechnology, and may be used for producing Polymer-Layered Silicate Nanocomposites (PLSNs) and medical applications. The current processes for producing nanoclay from bentonite ore are unable to separate impurities and unqualified nanoclay that can't disperse exfoliatedly in water from the qualified nanoclay. Therefore, when the nanoclay produced from the current processes is applied for making PLSNs, the results do prevent PLSNs from being industralized.

### SUMMARY OF THE INVENTION

A primary objective of the invention is to provide a process for producing nanoclay without any impurities as well as unqualified nanoclay that can't disperse exfoliatedly in water.

The process outlined in the present invention includes mixing a layered clay, such as bentonite ore, with 30-500 times by weight of water; keeping the mixture still for a while to allow the layered clay and water to undergo a hydration reaction, and stirring the mixture to form the liquid; keeping the liquid still in the first container for about 48 hours, wherein precipitate is formed at the bottom of the first container, following by decanting the liquid that is free from the precipitate from the first container to the second container and the liquid kept in the second container for enough time; for example 75 days, wherein the precipitate is formed at the bottom of the second container; decanting the liquid that is free from the precipitate from the second container; and drying it to be nanoclay.

The principles of gravitational force and specific weight are applied in this invention so that impurities and unqualified nanoclays in bentonite ores will precipitate and are separated from the liquid. If the liquid is kept still for enough time the impurities and unqualified nanoclays that can't disperse exfoliatedly in water in the bentonite ores will settle down to the bottom. In the end, the liquid will be consisted of qualified nanoclays and water only.

### DETAILED DESCRIPTION OF THE INVENTION

The present invention discloses a process for preparing nanoclay, which comprises the following steps:
(a) mixing a layered clay with 30-500 times by weight of water, and keeping the resulting mixture still for 1 - 720 hours;
(b) stirring the mixture from step (a) to form the liquid and impurities;
(c) keeping still the liquid and precipitate from step (b) in the first container for 6 - 480 hours, wherein the precipitate is formed at a bottom of the first container;
decanting the liquid that is free from the precipitate from the first container; keeping still the liquid free from the precipitate decanted from the first container in the second container for 1-180 days, wherein the precipitate is formed at a bottom of the second container;
decanting the liquid that is free from the precipitate from the second container; and
drying the liquid free from the precipitate obtained in step (f) to be nanoclays.

Preferably, the layered clay used in step (a) is bentonite ore, montmorillonite, or Beidellite. More preferably, the layered clay used in step (a) is bentonite ore.

Preferably, step (e) further comprises:
keeping still the liquid free from the precipitate, decanted from the first container, in the second container for 6 - 480 hours wherein the precipitate is formed at a bottom of the second container;
decanting the liquid that is free from the precipitate from the second container; and
keeping still the liquid free from the precipitate decanted from the second container in a third container for 1-180 days, wherein a precipitate is formed at bottom of the third container;
accordingly, the liquid, free from the precipitate, decanted from the third container is used in step (f).

Preferably, time for keeping still the liquid free from the precipitate in the second container is about 14 days, and time for keeping still the liquid free from the precipitate in the third container is about 120 days.

Preferably, the liquid free from the precipitate is decanted from the second container and the liquid free from the precipitate is decanted from the third container.

Preferably, in step (d) of the process, the liquid free from the precipitate is decanted from the first container.

Preferably, in step (f) of the process, the liquid free from the precipitate is decanted from the second container.

Preferably, in step (a) of the process, the layered clay is mixed with 140 times by weight of water, and the resulting mixture is kept still for about 24 hours.

Preferably, in step (c) of the process, the liquid free from the precipitate is kept still in the first container for about 48 hours.

Preferably, in step (g) of the process, the liquid free from the precipitate is dried via heating, vacuum heating, spraying or a combination thereof.

Preferably, in step (g) of the process, the liquid free from the precipitate is dried by using cyclone.

Preferably, the process of the present invention further comprises a step of grinding a dried product resulting from step (g).

The present invention also provides a pure nanoclay, and when the pure nanoclay is mixed with 100-200 times by weight of water for 1 - 10 days, and preferably for 10days, no precipitate is formed.

The water used in this invention is pure water; for instance, deionized water, distilled water, and RO (Reverse Osmosis) water.

The specified embodiments of the invention below-mentioned are to facilitate better understanding about the present invention, to demonstrate the illustration, but not to restrict the scope of the present invention.

### Example 1

### Preparing nanoclay from bentonite ore:

(a) Placed 60g of bentonite ore (Iran Chemiral Co.) into the first plastic cylindrical container with 32 cm in height and 23 cm in diameter. Subsequently, 8,400 ml distilled water was poured into the cylindrical container. After keeping still a mixture of bentonite ore and water for 24 hours, the mixture was stirred at 100 rpm for 20 minutes, and became liquid along with some solid precipitate.
(b) The mixture was then kept still for 48 hours, and precipitate was found at bottom of the first cylindrical container. The liquid of the first cylindrical container was decanted into the second plastic cylindrical container with the same size as the first container.
(c) The liquid was kept still in the second plastic cylindrical container for 7 days, and precipitate was found at the bottom of the second cylindrical container. The liquid of the second plastic cylindrical container was decanted into the third plastic cylindrical container which has the same size as the first container.
(d) The liquid was kept still in the third plastic cylindrical container for another 75 days, wherein precipitate was found at the bottom of the third plastic cylindrical container.
(e) 2000 ml of the liquid was taken from the upper portion of the liquid in the third plastic cylindrical container; another 2000 ml of the liquid was taken from the upper portion of the liquid remaining in the cylindrical container, and 2000 ml of the liquid was taken from the upper portion of the liquid remaining in the third plastic cylindrical container. The liquids taken out at three separate times were baked and dried in an oven (250°C, 48 hours), and dried nanoclays were separately ground up for 1 minute to be powdered nanoclays. The three different powdered nanoclays were tested for swelling factor according to American Colloid Corp.'s measures. For each nanoclay, 2 g of nanoclay and 100 ml of distilled water were put into a 100 ml test tube and kept still for 24 hours, and the height of swelled clay in the test tube was observed. It was found that the height of swelled clay in the test tubes for the three different powdered nanoclays were 56 ml, 57 ml, and 61 ml, respectively. Because the three data of swelling factor are within the tolerance, the nanoclays are considered to be qualified nanoclays, without impurities and unqualified nanoclays which can't disperse exfoliatedly in water.

If any one of the three data of swelling factor in step (e) is beyond the tolerance ( smaller than average data by 3 ml or more), steps (a) to (e) will be repeated, except that the liquid will be kept still for more days in step (d), until the three data of swelling factor in step (e) fall within the tolerance.

### Example 2

Steps (a) to (d) of Example 1 were repeated, and the liquid kept still for 75 days in step (d) was decanted from the precipitate at the bottom of the container. Subsequently, the liquid free from the precipitate was baked and dried in an oven (250°C, 48 hours), and nanoclays from the drying was ground up for 1 minute to become powdered nanoclays.

In this invention, the principles of gravitational force and specific weight have been applied to allow the impurities as well as unqualified nanoclays that can't disperse exfoliatedly in water in the bentonite ore in the aforesaid mixture to precipitate. If the mixture is kept still for enough time, the impurities as well as unqualified nanoclays that can't disperse exfoliatedly in water in the bentonite ores will settle down to the bottom. The decanted liquid will be only qualified nanoclays and water in the final end stage. As a result, the swelling factor for different samples of nanoclays dried from the different portion of the liquid will be in tolerable range.

The specified embodiments mentioned above are intended for demonstration only and are not meant to confine the present invention. Any modifications and/or changes to the embodiments are within scope and spirit of the present invention. The scope of the present invention is set forth by the claims below.

## Claims

1. A process for preparing nanoclay, comprising the following steps:
(a) mixing a layered clay with 30-500 times by weight of water, and keeping the resulting mixture still for 1 - 720 hours;
(b) stirring the mixture from step (a) to form the liquid and impurities;
(c) keeping still the liquid and precipitate from step (b) in the first container for 6 - 480 hours, wherein the precipitate is formed at a bottom of the first container;
(d) decanting the liquid that is free from the precipitate from the first container;
(e) keeping still the liquid free from the precipitate decanted from the first container in the second container for 1-180 days, wherein the precipitate is formed at a bottom of the second container;
(f) decanting the liquid that is free from the precipitate from the second container; and
(g) drying the liquid free from the precipitate obtained in step (f) to be nanoclays.

2. The process of claim 1, wherein the layered clay used in step (a) is bentonite ore, montmorillonite, or Beidellite.

3. The process of claim 2, wherein the layered clay used in step (a) is bentonite ore.

4. The process of claim 3, wherein step (e) further comprises:
keeping still the liquid free from the precipitate, decanted from the first container, in the second container for 6 - 480 hours wherein the precipitate is formed at a bottom of the second container;
decanting the liquid that is free from the precipitate from the second container; and
keeping still the liquid free from the precipitate decanted from the second container in a third container for 1-180 days, wherein a precipitate is formed at bottom of the third container;
accordingly, the liquid, free from the precipitate, decanted from the third container is used in step (f).

5. The process of claim 4, wherein time for keeping still the liquid free from the precipitate in the second container is about 14 days, and time for keeping still the liquid free from the precipitate in the third container is about 120 days.

6. The process of claim 1, wherein in step (d), the liquid free from the precipitate is decanted from the first container.

7. The process of claim 1, wherein in step (f), the liquid free from the precipitate is decanted from the second container.

8. The process of claim 4, wherein the liquid free from the precipitate is decanted from the second container and the liquid free from the precipitate is decanted from the third container.

9. The process of claim 1, wherein in step (a), the layered clay is mixed with 140 times by weight of water, and the resulting mixture is kept still for about 24 hours.

10. The process of claim 1, wherein in step (c), the liquid free from the precipitate is kept still in the first container for about 48 hours.

11. The process of claim 1, wherein in step (g), the liquid free from the precipitate is dried via heating, vacuum heating, spraying or a combination thereof.

12. The process of claim 1, wherein in step (g), the liquid free from the precipitate is dried by using cyclone.

13. The process of claim 1 further comprising a step of grinding a dried product resulting from step (g).

14. A pure nanoclay, wherein when the pure nanoclay is mixed with 100-200 times by weight of water for 1 -10 days, no precipitate is formed.

15. The pure nanoclay of claim 14, wherein when the pure nanoclay is mixed with 100-200 times by weight of water for 10 days, no precipitate is formed.
